# EUROPEAN PATENT APPLICATION

(11) **EP 2 663 096 A1**
(43) Date of publication of application: **13.11.2013**
(21) Application number: 13166841.0
(22) Date of filing: 07.05.2013
(51) Int. Cl.: H04R 25/00

(54) **Method for acoustical loading of hearing assistance device receiver**

(30) Priority: 07.05.2012 US 201261643679 P
(71) Applicant: Starkey Laboratories, Inc., Eden Prairie, MN 55344 (US)
(72) Inventor: Burns, Thomas Howard, St. Louis Park, MN Minnesota 55416 (US)
(74) Representative: UEXKÜLL & STOLBERG

(57) **Abstract**

Disclosed herein, among other things, are methods and apparatus for hearing assistance devices, and in particular to improved methods and apparatus for acoustical loading of hearing assistance device receivers. One aspect of the present subject matter relates to a hearing assistance method. A hearing assistance device including hearing assistance electronics is provided. A receiver assembly includes a receiver that is configured to convert an electrical signal from the hearing assistance electronics to an acoustic signal. The receiver is acoustically loaded using air inside the receiver assembly, providing a plurality of acoustical resonators that can be tuned to smooth a frequency response of the receiver to improve audio quality of the receiver.

## Description

### CLAIM OF PRIORITY AND INCORPORATION BY REFERENCE

The present application claims the benefit under 35 U.S.C. §119(e) of U.S. Provisional Patent Application 61/643,679, filed May 7, 2012, the disclosure of which is hereby incorporated by reference herein in its entirety.

### FIELD OF THE INVENTION

The present subject matter relates generally to hearing assistance devices, and in particular to systems and methods for acoustical loading of hearing assistance device receivers.

### BACKGROUND

Modem hearing assistance devices, such as hearing aids, typically include digital electronics to enhance the wearer's listening experience. Hearing aids are electronic instruments worn in or around the ear that compensate for hearing losses by specially amplifying sound. Hearing aids use transducers (such as microphones and receivers) and electro-mechanical components which are connected via wires to the hearing aid circuitry. In addition to transducers, modern hearing assistance devices incorporate A/D converters, DAC's, signal processors, memory for processing the audio signals, and wireless communication systems.

A hearing assistance device receiver (or speaker) has a frequency response that is dependent upon the acoustical load of the receiver. The acoustical load on a receiver can vary based on the geometry of the sound tube and air volume within the receiver housing, producing a non-uniform frequency response and correspondingly poor sound quality.

What is needed in the art is an improved method for acoustical loading of hearing assistance device receivers.

### SUMMARY

Disclosed herein, among other things, are methods and apparatus for hearing assistance devices, and in particular to improved methods and apparatus for acoustical loading of hearing assistance device receivers.

One aspect of the present subject matter relates to a hearing assistance method. A hearing assistance device including hearing assistance electronics is provided. A receiver assembly includes a receiver that is configured to convert an electrical signal from the hearing assistance electronics to an acoustic signal. The receiver is acoustically loaded using air inside the receiver assembly, providing a plurality of acoustical resonators and tuning at least one of the plurality of acoustical resonators to smooth a frequency response of the receiver to improve audio quality of the receiver.

One aspect of the present subject matter relates to a hearing assistance device including hearing assistance electronics and a receiver assembly including a receiver configured to convert an electrical signal from the hearing assistance electronics to an acoustic signal, the receiver assembly including a plurality of acoustical resonators. In various embodiments, the receiver is configured to be acoustically loaded using air inside the receiver assembly by tuning at least one of the plurality of acoustical resonators to smooth a frequency response of the receiver to improve audio quality of the receiver.

This Summary is an overview of some of the teachings of the present application and not intended to be an exclusive or exhaustive treatment of the present subject matter. Further details about the present subject matter are found in the detailed description and appended claims. The scope of the present invention is defined by the appended claims and their legal equivalents.

### BRIEF DESCRIPTION OF THE DRAWINGS

FIG. 1A illustrates a cross section of a hearing assistance device receiver with an acoustical load.

FIG. 1B illustrates a circuit diagram showing an equivalent circuit of the device receiver of FIG. 1A.

FIG. 2A illustrates a cross section of an acoustical load for a hearing assistance device receiver system, according to various embodiments of the present subject matter.

FIG. 2B illustrates a circuit diagram showing an equivalent circuit of the system of FIG. 2A, according to various embodiments of the present subject matter.

FIG. 3A illustrates a cross section of an acoustical load for a hearing assistance device receiver system including earmold amendments, according to various embodiments of the present subject matter.

FIG. 3B illustrates a circuit diagram showing an equivalent circuit of the system of FIG. 3A, according to various embodiments of the present subject matter.

### DETAILED DESCRIPTION

The following detailed description of the present subject matter refers to subject matter in the accompanying drawings which show, by way of illustration, specific aspects and embodiments in which the present subject matter may be practiced. These embodiments are described in sufficient detail to enable those skilled in the art to practice the present subject matter. References to "an", "one", or "various" embodiments in this disclosure are not necessarily to the same embodiment, and such references contemplate more than one embodiment. The following detailed description is demonstrative and not to be taken in a limiting sense. The scope of the present subject matter is defined by the appended claims, along with the full scope of legal equivalents to which such claims are entitled.

Disclosed herein, among other things, are methods and apparatus for hearing assistance devices, and in particular to improved methods and apparatus for acoustical loading of hearing assistance device receivers. One aspect of the present subject matter relates to a hearing assistance method. A hearing assistance device including hearing assistance electronics is provided. A receiver assembly includes a receiver that is configured to convert an electrical signal from the hearing assistance electronics to an acoustic signal. The receiver is acoustically loaded using air inside the receiver assembly, providing a plurality of acoustical resonators and tuning at least one of the plurality of acoustical resonators to smooth a frequency response of the receiver to improve audio quality of the receiver.

In various embodiments, the receiver assembly includes a mu metal housing configured to enclose the receiver. The plurality of acoustical resonators include Helmholz resonators, in various embodiments. Other types of acoustical resonators can be used without departing from the scope of the present subject matter. The plurality of acoustical resonators include three or more acoustical resonators, in various embodiments. Providing a receiver assembly includes placing the receiver in a mu metal housing, and the mu metal housing is configured to provide a plurality of acoustical resonators, such as Helmholz resonators, in various embodiments. Providing Helmholz resonators includes providing three or more Helmholz resonators, in an embodiment. In various embodiments, tuning the plurality of acoustical resonators includes producing a high density of resonance peaks in a range from 3 kHz to 10 kHz. Tuning at least one of the plurality of acoustical resonators includes providing additional acoustical gain, in an embodiment. In one embodiment, acoustically loading the receiver includes using air cavities inside an earmold of the hearing assistance device. The earmold is fabricated using a stereolithography (SLA) process to include folded acoustical conduits in the earmold, in an embodiment. In various embodiments, tuning at least one of the plurality of acoustical resonators includes adjusting a size of air cavities in the mu metal housing. Tuning at least one of the plurality of acoustical resonators includes adjusting a size of air cavities in the earmold, in various embodiments. In various embodiments, tuning includes tuning the plurality of acoustical resonators.

In general, the simulated real ear (SRE) acoustical load on a behind-the-ear (BTE) hearing instrument with balanced-armature receiver can be simplified as an 8cm (length) by 1.5mm (inner diameter) tube terminated by a closed air cavity of 2cc. This geometry, in addition to the air volume within the receiver casing, provides a plurality of acoustical resonators, such as Helmholtz resonators, together with standing waves inside the tube, all which couple to the mechanical resonance of the armature, to yield a typical SRE acoustical frequency response which contains at least four peaks having peak-to-valley ratios as much as 10dB, i.e., it is a rather jagged frequency response. It would be advantageous, therefore, to have a flatter, smoother frequency response for improved sound quality.

Others use a combination of earhook filters to smooth the frequency response, but these filters tend to clog with wax. Another uses a tube with a step at the earmold to extend high frequencies, but the stepped tube protrudes out of the earmold and appears obtrusive.

The present subject matter takes advantage of the unused air inside of a typical receiver assembly, where the receiver has been placed inside an additional mu metal can (or housing) for electromagnetic shielding, thereby providing additional acoustical resonators that can be tuned. This provides for a smoother SRE response, compared to conventional BTE responses. The present subject matter provides an additional number of acoustical resonators (three, in an embodiment) that can be distributed more evenly, and smoothly, across the audible range of frequencies. The result is a smaller peak-to-valley ratio in the response, and an overall improved sound quality.

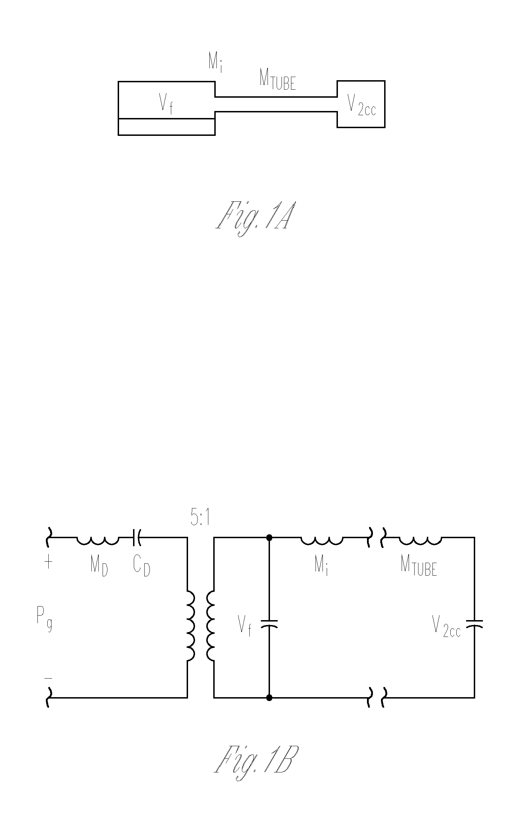

FIG. 1A illustrates a section and FIG. 1B illustrates an acoustical equivalent circuit of a simulated real ear acoustical load for a BTE hearing instrument. In FIG. 1A, a cross section from a typical hearing instrument SRE acoustical load is shown together with a lumped element analog. The lumped element analog shows the equivalent circuit of an acoustical resonator, such as a Helmholtz resonator. Standing waves in the tube are not captured in the circuit, but for those skilled in the art of transducer modeling, transmission line elements can be used to model higher order effects such as standing waves. In general, the load of FIG 1A has the benefit of a Helmholtz resonance together with higher order standing waves.

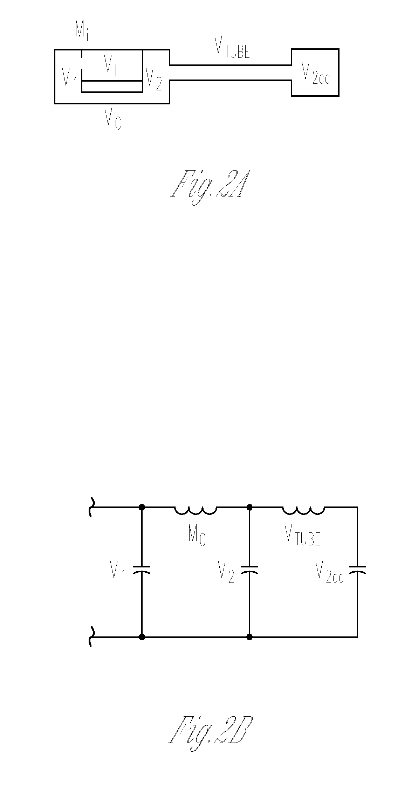

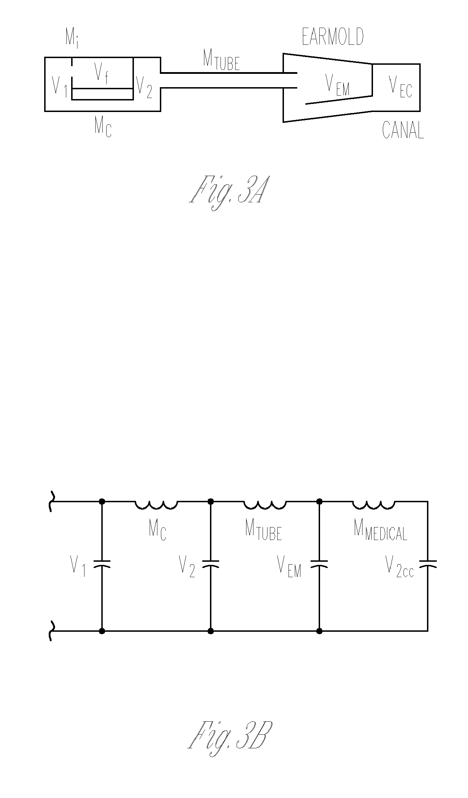

FIG. 2A illustrates a cross section and FIG. 2B illustrates an equivalent acoustical circuit of a new SRE acoustical load for a BTE instrument. FIG. 3A illustrates a section and FIG. 3B an equivalent acoustical circuit of another SRE acoustical load for a BTE hearing instrument, including earmold amendments. One aspect of the present subject matter relates to a hearing assistance device including hearing assistance electronics and a receiver assembly including a receiver configured to convert an electrical signal from the hearing assistance electronics to an acoustic signal, the receiver assembly including a plurality of acoustical resonators. In various embodiments, the receiver is configured to be acoustically loaded using air inside the receiver assembly by tuning the plurality of acoustical resonators to smooth a frequency response of the receiver to improve audio quality of the receiver.

In various embodiments, the receiver assembly includes a mu metal housing configured to enclose the receiver. The plurality of acoustical resonators include three or more acoustical resonators, in various embodiments. Providing a receiver assembly includes placing the receiver in a mu metal housing, and the mu metal housing is configured to provide a plurality of acoustical resonators in various embodiments. Providing a plurality of acoustical resonators includes providing at least one Helmholz resonator, in an embodiment. Other types of acoustical resonators can be used without departing from the scope of the present subject matter. In various embodiments, tuning the plurality of acoustical resonators includes producing a high density of resonance peaks in a range from 3 kHz to 10 kHz. Tuning the plurality of acoustical resonators includes providing additional acoustical gain, in an embodiment. In one embodiment, acoustically loading the receiver includes using air cavities inside an earmold of the hearing assistance device. The earmold is fabricated using a stereolithography (SLA) process to include folded acoustical conduits in the earmold, in an embodiment. In various embodiments, tuning at least one of the plurality of acoustical resonators includes adjusting a size of an air cavity in the mu metal housing. Tuning at least one of the plurality of acoustical resonators includes adjusting a size of an air cavity in the earmold, in various embodiments.

In various embodiments, the acoustical load can also be implemented in a custom earmold, where V₂, Vₑₘ, and M_{tube} are effectively eliminated. In addition, variations of a horn can be fabricated using stereolithography (SLA) processes with folded acoustical conduits in the earmold in various embodiments. Benefits of the present subject matter include a smoother frequency response and better sound quality given a BTE instrument with a single balanced armature receiver.

In various embodiments, the present subject matter includes multiple acoustical RLC (resistance-inductance-capacitance) networks to load the hearing assistance device receiver. In one embodiment, three acoustical RLC networks are provided by the present subject matter. The acoustical RLC networks are defined by the dimensions of small cavities and air passages loading the receiver, in various embodiments. In various embodiments, the acoustical RLC networks are adjusted to produce a high density of resonance peaks in a range from 3kHz to 10kHz, thereby providing additional acoustical gain and a smoother acoustical response.

It is understood that variations in communications protocols, antenna configurations, and combinations of components may be employed without departing from the scope of the present subject matter. Hearing assistance devices typically include an enclosure or housing, a microphone, hearing assistance device electronics including processing electronics, and a speaker or receiver. It is understood that in various embodiments the microphone is optional. It is understood that in various embodiments the receiver is optional. Antenna configurations may vary and may be included within an enclosure for the electronics or be external to an enclosure for the electronics. Thus, the examples set forth herein are intended to be demonstrative and not a limiting or exhaustive depiction of variations.

The present subject matter can be used for a variety of hearing assistance devices, including but not limited to, cochlear implant type hearing devices, hearing aids, such as behind-the-ear (BTE), in-the-ear (ITE), in-the-canal (ITC), or completely-in-the-canal (CIC) type hearing aids. It is understood that behind-the-ear type hearing aids may include devices that reside substantially behind the ear or over the ear. Such devices may include hearing aids with receivers associated with the electronics portion of the behind-the-ear device, or hearing aids of the type having receivers in the ear canal of the user. Such devices are also known as receiver-in-the-canal (RIC) or receiver-in-the-ear (RITE) hearing instruments. It is understood that other hearing assistance devices not expressly stated herein may fall within the scope of the present subject matter.

This application is intended to cover adaptations or variations of the present subject matter. It is to be understood that the above description is intended to be illustrative, and not restrictive. The scope of the present subject matter should be determined with reference to the appended claims, along with the full scope of legal equivalents to which such claims are entitled.

## Claims

1. A hearing assistance device, comprising:
hearing assistance electronics;
a receiver assembly including a receiver configured to convert an electrical signal from the hearing assistance electronics to an acoustic signal, the receiver assembly including a plurality of acoustical resonators;
wherein the receiver is configured to be acoustically loaded using air inside the receiver assembly by tuning at least one of the plurality of acoustical resonators to smooth a frequency response of the receiver to improve audio quality of the receiver.

2. The device of claim 1, wherein the receiver assembly includes a mu metal housing configured to enclose the receiver.

3. The device of claim 1 or claim 2, wherein the plurality of acoustical resonators include at least one Helmholz resonator.

4. The device of any of the preceding claims, wherein the hearing assistance device includes a hearing aid.

5. The device of claim 4, wherein the hearing aid includes a behind-the-ear (BTE) hearing aid.

6. A method, comprising:
providing a hearing assistance device including hearing assistance electronics;
providing a receiver assembly including a receiver configured to convert an electrical signal from the hearing assistance electronics to an acoustic signal;
acoustically loading the receiver by using air inside the receiver assembly,
wherein acoustically loading the receiver includes providing a plurality of acoustical resonators and tuning at least one of the plurality of acoustical resonators to smooth a frequency response of the receiver to improve audio quality of the receiver.

7. The method of claim 6, wherein providing a receiver assembly includes placing the receiver in a mu metal housing.

8. The method of claim 7, wherein the mu metal housing is configured to provide acoustical resonators.

9. The method of any of claim 6 through claim 8, wherein providing a plurality of acoustical resonators includes providing at least one Helmholz resonator.

10. The method of any of claim 6 through claim 9, wherein tuning at least one of the acoustical resonators includes producing a high density of resonance peaks in a range from 3 kHz to 10 kHz.

11. The method of any of claim 6 through claim 10, wherein tuning at least one of the acoustical resonators includes providing additional acoustical gain.

12. The method of any of claim 6 through claim 11, further comprising acoustically loading the receiver by using air cavities inside an earmold of the hearing assistance device.

13. The method of claim 12, wherein the earmold is fabricated using a stereolithography (SLA) process to include folded acoustical conduits in the earmold.

14. The method of claim 7, wherein tuning at least one of the acoustical resonators includes adjusting a size of air cavities in the mu metal housing.

15. The method of claim 12, wherein tuning at least one of the acoustical resonators includes adjusting a size of air cavities in the earmold.
